# EUROPEAN PATENT APPLICATION

(11) **EP 4 711 247 A1**
(43) Date of publication of application: **18.03.2026**
(21) Application number: 25194978.0
(22) Date of filing: 08.08.2025
(51) Int. Cl.: B62D 25/00, B62D 25/02, B62D 27/06, B62D 29/00, B60K 1/04

(54) **VEHICLE STRUCTURE**

(30) Priority: 29.08.2024 JP 2024148034
(71) Applicant: TOYOTA JIDOSHA KABUSHIKI KAISHA, Toyota-shi, Aichi-ken 471-8571 (JP)
(72) Inventor: HAYASE, Jun, TOYOTA-SHI, AICHI-KEN, 471-8571 (JP)
(74) Representative: Cabinet Beau de Loménie

(57) **Abstract**

A vehicle structure (10) including a first framework module (16) and a second framework module (14, 18), the first framework module (16) supporting a battery pack (28) and including: a pair of side members (32) at both end portions, in a vehicle width direction, of the first framework module (16); and a first cross member (34, 36) extending between the pair of side members (32) at substantially central portions, in the vehicle front-rear direction, of the pair of side members (32); the pair of side members (32) and the first cross member (34, 36) being integrally formed; and the second framework module (14, 18) including: a second cross member (24, 40, 42); and a pair of extension portions (26, 44) respectively extending, in the vehicle front-rear direction, at both side portions, in the vehicle width direction, of the second cross member (24, 40); the pair of extension portions (26, 44) being joined to end portions of the pair of side members (32), and the second cross member (24, 40, 42) and the pair of extension portions (26, 44) being integrally formed.

## Description

### BACKGROUND

### Technical Field

The present disclosure relates to a vehicle structure.

### Related Art

A technology relating to a vehicle lower portion structure in which a battery is mounted under a floor of a vehicle is disclosed in, for example, Japanese Patent Application Laid-Open (JP-A) No. 2019-156029.

### SUMMARY

In JP-A No. 2019-156029, a left and right pair of front side members are respectively provided at both sides in a vehicle width direction of the floor of a cabin.

The front side members extend in a vehicle front-rear direction from a front bumper reinforcement through a dash panel to the floor. The front bumper reinforcement is provided at the vehicle front end and extends in the vehicle width direction. The dash panel partitions a power compartment from the front end of the cabin.

A left and right pair of rockers respectively extend in the vehicle front-rear direction at outer sides in the vehicle width direction relative to the left and right pair of front side members. Front ends of a left and right pair of rear side members are connected to respective rear ends of the left and right front side members. The rear side members extend in the vehicle front-rear direction. A rear bumper reinforcement that extends in the vehicle width direction may be connected to rear ends of the left and right pair of rear side members.

When, for example, different members that are arranged in a vehicle front-rear direction are to be connected (joined) to one another in a state in which the members are positioned in the vehicle width direction, no particular problem arises if a left and right pair of members are formed by separate left and right bodies. However, when a left and right pair of members are formed in an integrated state with one another, positioning of the different members in the vehicle width direction is difficult. Thus, high dimensional precision of each member is required and a production rate declines.

In consideration of the circumstances described above, the present disclosure provides a vehicle structure that may tolerate fabrication errors between members that are joined to one another.

A vehicle structure according to a first aspect of the present disclosure includes: a first framework module and a second framework module. The first framework module supports a battery pack disposed at a lower portion of a vehicle and includes a pair of side members respectively extending, in a vehicle front-rear direction, at both end portions, in a vehicle width direction, of the first framework module. The first framework module includes a first cross member extending, in the vehicle width direction, between the pair of side members at substantially central portions, in the vehicle front-rear direction, of the pair of side members, and the pair of side members and the first cross member are integrally formed. The second framework module includes a second cross member extending in the vehicle width direction and a pair of extension portions respectively extending, in the vehicle front-rear direction, at both side portions, in the vehicle width direction, of the second cross member. The pair of extension portions are joined to end portions, in the vehicle front-rear direction, of the pair of side members, and the second cross member and the pair of extension portions are integrally formed.

In the vehicle structure according to the first aspect, the first framework module and the second framework module are provided. The first framework module supports a battery pack disposed at a lower portion of the vehicle. The pair of side members and first cross member of the first framework module are formed integrally. The pair of side members respectively extend, in the vehicle front-rear direction, at the both end portions, in the vehicle width direction, of the first framework module. The first cross member extends, in the vehicle width direction, between the pair of side members at the substantially central portions of the pair of side members in the vehicle front-rear direction.

The second cross member and pair of extension portions of the second framework module are formed integrally. The second cross member extends in the vehicle width direction. The pair of extension portions respectively extend, in the vehicle front-rear direction, at the both end portions, in the vehicle width direction, of the second cross member. The pair of extension portions are joined to end portions, in the vehicle front-rear direction, of the pair of side members.

In the present disclosure, the end portions, in the vehicle front-rear direction, of the side members of the first framework module are formed as free ends. The side members are capable of resiliently bending about the substantially central portions, in the vehicle front-rear direction, of the side members, at which the first cross member is provided.

Positions of the end portions of the side members may be able to be shifted in the vehicle width direction by the resilient bending. When the pair of extension portions of the second module are being joined to the corresponding end portions of the pair of side members of the first framework module, mispositioning, in the vehicle width direction, between the extension portions and the end portions of the side members may be adjusted by the resilient bending of the side members. A reduction in joining strength between the pair of extension portions of the second module and the corresponding end portions of the pair of side members due to gaps forming may be suppressed.

The second framework module is provided with the second cross member. Therefore, in the present disclosure, even though the end portions of the side members of the first framework module are free ends, rigidity of the first framework module is assured because the pair of extension portions are linked, in the vehicle width direction, by the second cross member.

The meaning of the term "integrally formed" as used herein is intended to include not just structures in which the pair of side members and the first cross member are integrated by integral molding but also structures in which the first cross member is integrated with the pair of side members by joins such as fasteners or the like.

Further, the meaning of the term "integrally molded" is intended to include not just structures in which a metal material such as an aluminium alloy, a magnesium alloy or the like is integrally molded by die-casting but also structures in which a resin material such as a CFRP or the like is integrally molded by injection molding or the like.

In a vehicle structure according to a second aspect of the present disclosure, in the vehicle structure of the first aspect, the second framework module is formed by casting and serves as at least one of a front module that constitutes a framework of a vehicle front portion or a rear module that constitutes a framework of a vehicle rear portion.

In the vehicle structure of the second aspect, the second framework module is formed by casting and is used as at least one of the front module that constitutes the framework of the vehicle front portion or the rear module that constitutes the framework of the vehicle rear portion. That is, the second framework module of the present disclosure may be employed as a front module or may be employed as a rear module, or further may be employed as both a front module and a rear module. In the present disclosure, the at least one of the front module and the rear module is an "integrally molded" member.

For example, compared with a comparative example in which a front module is integrated by plural members being joined to one another, a number of members may be reduced by the front module according to the present disclosure being integrally molded. Moreover, compared to the case of joining plural members to one another, a number of work steps may be reduced in the present disclosure.

In a vehicle structure according to a third aspect of the present disclosure, in the vehicle structure of the first aspect, the second framework module further includes a left and right pair of wheel houses in which wheels are to be disposed, and the left and right pair of wheel houses are linked via the second cross member.

In the vehicle structure of the third aspect, the second framework module includes the left and right pair of wheel houses in which wheels are to be disposed, and the left and right pair of wheel houses are linked via the second cross member. Thus, because the left and right pair of wheel houses and the second cross member are formed integrally in the present disclosure, a number of components may be reduced compared to a structure in which the left and right pair of wheel houses and the second cross member are formed as respectively separate bodies.

In a vehicle structure according to a fourth aspect of the present disclosure, in the vehicle structure of the first aspect, the pair of extension portions each include: a first joining portion that is joined to an inner wall portion forming an inner end, in the vehicle width direction, of a corresponding side member of the pair of side members; and a second joining portion that is joined to an upper wall portion forming an upper end, in a vehicle vertical direction, of the corresponding side member of the pair of side members.

In the vehicle structure of the fourth aspect, each extension portion formed at the second framework module includes the first joining portion and the second joining portion to be joined to the corresponding side member. The first joining portion is joined to the inner wall portion forming the inner end, in the vehicle width direction, of the corresponding side member, and the second joining portion is joined to the upper wall portion forming the upper end, in the vehicle vertical direction, of the corresponding side member.

At each joining portion at which each extension portion of the second framework module and corresponding side member are joined, a joining strength is lowered if a gap is formed between each extension portion and corresponding side member. In the present disclosure, mispositioning, in the vehicle width direction, between each extension portion and corresponding side member may be adjusted by the resilient bending of the side member, and a gap between each extension portion and corresponding side member may be eliminated. A decline in joining strength due to the formation of a gap may be suppressed.

The meaning of the term "join" as used herein is intended to include, beside fastening by fastening members such as bolts, rivets or the like, adhesion by an adhesive and deposition by welding or the like. These joining methods may be employed singly, or plural joining methods may be employed, such as bolts with adhesive or the like.

In a vehicle structure according to a fifth aspect of the present disclosure, in the vehicle structure of the first aspect, a through hole is formed at the first cross member, the battery pack being fastened via a first fastening member that is inserted into the through hole.

In the vehicle structure of the fifth aspect, the through hole is formed at the first cross member, and the battery pack is fastened via the first fastening member that is inserted into the through hole. That is, in the present disclosure the battery pack is to be supported by the pair of side members and the first cross member extending between the pair of side members. Because the battery pack is supported by the pair of side members and the battery pack is also supported by the first cross member, the present disclosure may inhibit a fall of the battery pack at a time of vehicle collision.

In a vehicle structure according to a sixth aspect of the present disclosure, in the vehicle structure of the fourth aspect, a first fastening hole is formed at at least one of the first joining portion or the second joining portion, a second fastening member being insertable into the first fastening hole.

In the vehicle structure of the sixth aspect, the first fastening hole is formed at at least one of the first joining portion or the second joining portion, and the second fastening member is inserted into and fastened to the first fastening hole. Therefore, in the present disclosure, each extension portion provided at the second framework module is joined to a corresponding side member provided at the first framework module via the second fastening member that is inserted into the first fastening hole.

Because each side member of the first framework module and each extension portion of the second framework module are directly joined via the second fastening member, a number of components may be reduced compared to, for example, a structure in which a side member and an extension portion are joined via a bracket, and a number of assembly steps is also reduced.

The first fastening hole referred to here may be provided at the first joining portion, may be provided at the second joining portion, or further may be provided at both the first joining portion and the second joining portion.

In a vehicle structure according to a seventh aspect of the present disclosure, in the vehicle structure of the sixth aspect, a cross section of each of the pair of side members cut, in a width direction orthogonal to a length direction, of each of the pair of side members is a chamber; and an opening portion, which is provided at a wall portion of each of the pair of the side member, opposes the first fastening hole.

In the vehicle structure of the seventh aspect, the cross section of each of the pair of side members cut along the width direction orthogonal to the length direction is a chamber shape. Therefore, the opening portion may be provided at a wall portion that is opposite the first fastening hole, and the fastening member may pass through the opening portion and be fastened to the first fastening hole.

In a vehicle structure according to an eighth aspect of the present disclosure, in the vehicle structure of the seventh aspect, a second fastening hole is formed at at least one of the inner wall portion or the upper wall portion of each of the pair of side members, the second fastening member being insertable into the second fastening hole; and the opening portion is provided at at least one of an outer wall portion forming an outer end, in the vehicle width direction, of each of the pair of side members or a lower wall portion forming a lower end, in the vehicle vertical direction, of each of the pair of side members.

In the vehicle structure of the eighth aspect, the opening portion is provided at the wall portion that is opposite the second fastening hole, and the fastening member may pass through the opening portion and may be fastened to the second fastening hole.

As described above, the vehicle structure according to the present disclosure may tolerate fabrication errors between members that are joined to one another.

### BRIEF DESCRIPTION OF THE DRAWINGS

Fig. 1 is a perspective view in which a vehicle employing a vehicle structure according to a present exemplary embodiment is seen diagonally from rear-left, from the upper side;
Fig. 2 is an exploded perspective view showing the vehicle in which the vehicle structure according to the present exemplary embodiment is employed; and
Fig. 3 is an end face view cut along line A-A in Fig. 1.

### DETAILED DESCRIPTION

A vehicle structure according to an exemplary embodiment of the present disclosure is described using the attached drawings. An arrow FR, an arrow UP and an arrow RH that are shown where appropriate in the drawings indicate, respectively, a vehicle front side, an upper side and a right side in a left-right direction (width direction). In the following descriptions, where the terms front, rear, upper, lower, left and right are used without being particularly specified, the same refer to front-rear in the vehicle front-rear direction, upper and lower in the vehicle vertical direction, and left and right in the vehicle left-right direction (the width direction).

### = Structures of the Vehicle Structure =

First, structures of the vehicle structure according to the present exemplary embodiment are described.

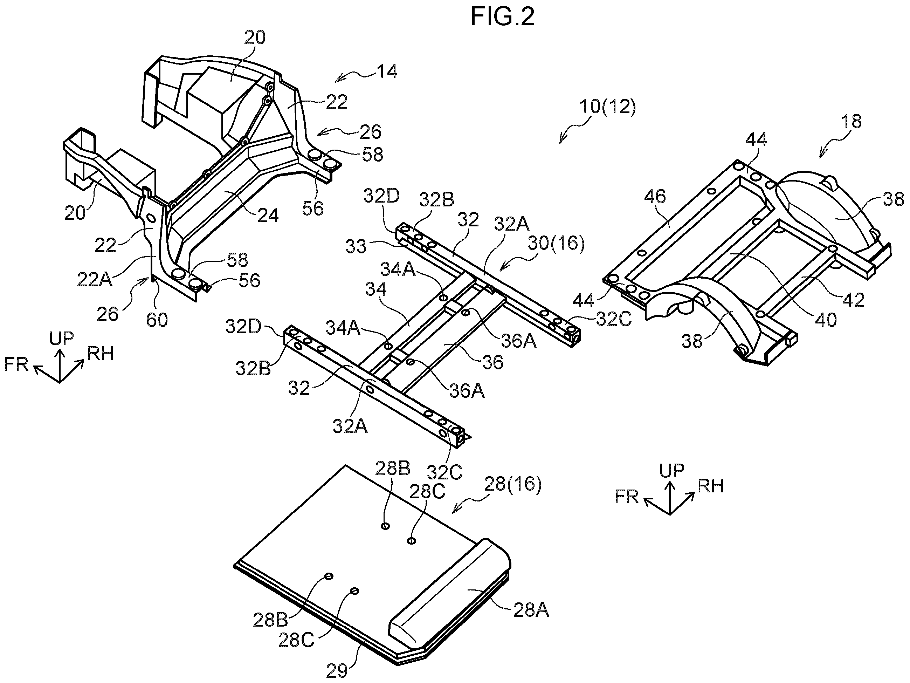

Fig. 2 schematically depicts an exploded perspective view of a vehicle 12 in which a vehicle structure 10 according to the present exemplary embodiment is employed. In the present exemplary embodiment, the vehicle 12 is divided into a vehicle front portion (below referred to as a front module) 14 that serves as a second framework module, a vehicle middle portion (below referred to as a center module) 16 that serves as a first framework module, and a vehicle rear portion (below referred to as a rear module) 18 that also serves as the second framework module.

### - Front module -

In the present exemplary embodiment, for example, the front module 14 is provided with wheel houses 20 at left and right of the vehicle front portion, in which wheels (not shown in the drawings) are to be disposed. Respective front pillars 22 are provided at the rear sides of the wheel houses 20. The front pillars 22 constitute side portions of the vehicle front portion. A cross member (a second cross member) 24 extends in the vehicle width direction so as to link the left and right pairs of wheel houses 20 and front pillars 22. Joining portions (extension portions) 26 (which are described below) respectively project in the vehicle front-rear direction from rear sides of lower end portions 22A of the front pillars 22. The joining portions 26 are joined to the center module 16.

The wheel houses 20, front pillars 22 and second cross member 24 are integrally molded (integrated) by die-casting of a material that is an aluminium alloy, a magnesium alloy or the like. Beside metals, the front module 14 may be integrally molded of a resin such as a carbon fiber-reinforced plastic (CFRP), glass fiber-reinforced plastic (GFRP) or the like.

### - Center module -

In the present exemplary embodiment, the center module 16 includes, for example, a battery pack 28 and a battery frame 30. The battery pack 28 is formed of, for example, a lightweight metal such as an aluminium alloy or the like. In plan view, the battery pack 28 is formed in a rectangular board shape whose longer direction is in the vehicle front-rear direction. An accessory portion 28A is provided at a rear end portion of the battery pack 28 in the vehicle front-rear direction.

The battery pack 28 is supported by the battery frame 30. The battery frame 30 is formed in, for example, a substantial "H" shape in plan view whose longer direction is in the vehicle front-rear direction. A left and right pair of side members 32 of the battery frame 30 extend in the vehicle front-rear direction at both of outer sides in the vehicle width direction of the battery pack 28.

Flanges 33 project from inner sides, in the vehicle width direction, of the left and right pair of side members 32. The flanges 33 project in directions towards one another. Flanges 29 project in horizontal directions from an outer periphery of the battery pack 28. In a state in which the flanges 29 and flanges 33 are vertically superposed, the flanges 29 and flanges 33 are joined to one another via adhesive or the like. Hence, the battery pack 28 is supported at the left and right pair of side members 32.

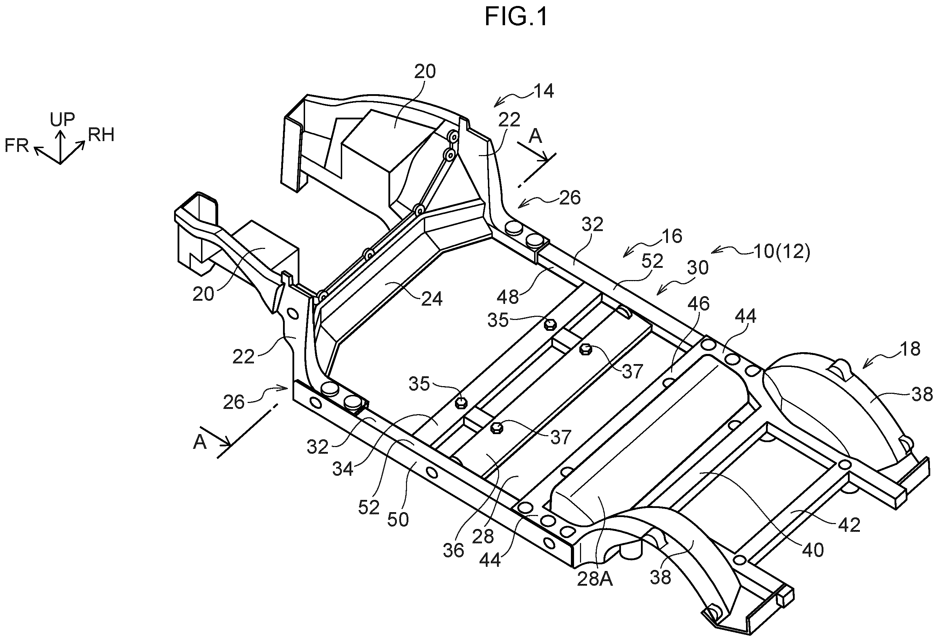

Center cross members 34 and 36 (a first cross member) with board shapes extend in the vehicle width direction from substantially central portions 32A in the vehicle front-rear direction of the left and right pair of side members 32. The center cross members 34 and 36 are disposed at vehicle front and rear to each other. Through holes 34A and 36A are formed at the left and right, in the vehicle width direction, of the center cross members 34 and 36, respectively. Bolts 35 shown in Fig. 1 (a first fastening member) can be inserted into the through holes 34A, and bolts 37 (the first fastening member) can be inserted into the through holes 36A. Each bolt 35 is fastened via, for example, a weld nut 28B provided at the side of the through hole 34A at which the battery pack 28 shown in Fig. 2 is disposed, and each bolt 37 is fastened via a weld nut 28C provided at the side of the through hole 36A at which the battery pack 28 is disposed.

The left and right pair of side members 32 and center cross members 34 and 36 of the battery frame 30 are integrally molded (integrated) by, for example, die-casting of a material that is an aluminium alloy, a magnesium alloy or the like. Alternatively, the left and right pair of side members 32 and center cross members 34 and 36 may be respectively formed by injection molding of a material that is an aluminium alloy, magnesium alloy or the like and integrated by being joined to one another. Beside metals, the battery frame 30 may be formed of a resin such as a CFRP or the like.

### - Rear module -

In the present exemplary embodiment, the rear module 18 is provided with, for example, wheel houses 38 at left and right of the vehicle rear portion, in which wheels (not shown in the drawings) are to be disposed. Cross members 40 and 42 (a second cross member) respectively extend in the vehicle width direction so as to link the left and right pair of wheel houses 38. The cross members 40 and 42 are disposed at vehicle front rear to each other. Joining portions 44 (the extension portions) respectively project in the vehicle front-rear direction from the front sides of the wheel houses 38. The joining portions 44 are joined to rear end portions 32C of the side members 32. A cross member 46 (the second cross member) extends in the vehicle width direction from distal end portions of the joining portions 44 and links the distal end portions with one another.

Similarly to the front module 14, the wheel houses 38 and cross members 40, 42 and 46 of the rear module 18 are integrally molded by die-casting of a material that is an aluminium alloy, a magnesium alloy or the like. Also similarly to the front module 14, beside metals, the rear module 18 may be integrally molded of a resin such as a CFRP, GFRP or the like.

### - The vehicle structure -

Principal portions of the vehicle structure according to the present exemplary embodiment are described.

The joining portions 26 of the front module 14 of the vehicle 12 are joined to front end portions 32B of the side members 32 of the center module 16, and the joining portions 44 of the rear module 18 of the vehicle 12 are joined to the rear end portions 32C of the side members 32 of the center module 16.

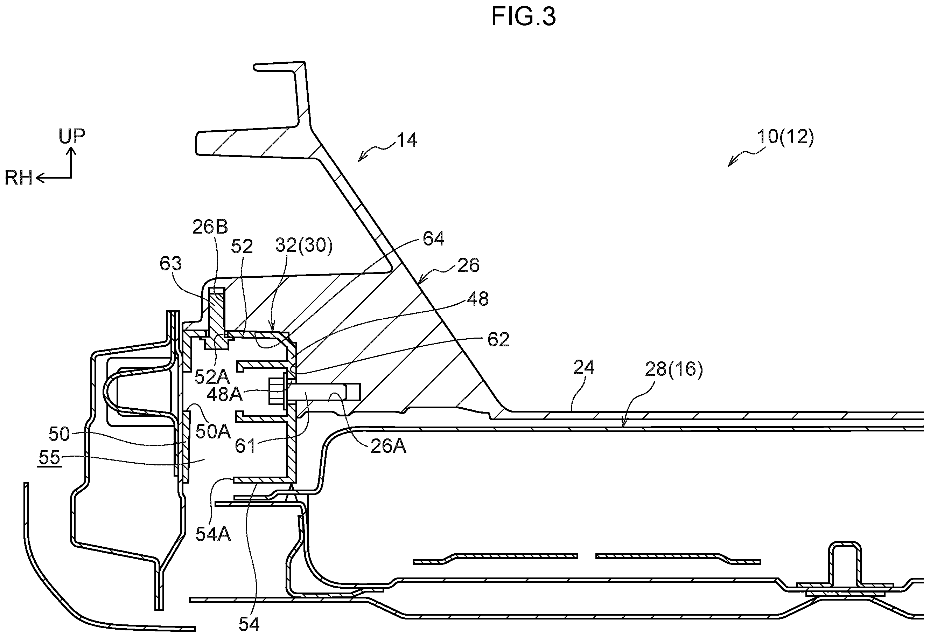

As an example in the present exemplary embodiment, a cross section of each side member 32 cut along the vehicle width direction is formed in a substantially rectangular shape and is a closed chamber. As shown in Fig. 3, the side member 32 forms a chamber portion 55 that includes an inner wall portion 48, an outer wall portion 50, an upper wall portion 52 and a lower wall portion 54. The inner wall portion 48 is disposed at the inner side in the vehicle width direction, and the outer wall portion 50 is disposed at the outer side in the vehicle width direction. The upper wall portion 52 links the upper end of the inner wall portion 48 and the upper end of the outer wall portion 50 with one another, and the lower wall portion 54 links the lower end of the inner wall portion 48 and the lower end of the outer wall portion 50 with one another.

As shown in Fig. 2 and Fig. 3, each joining portion 26 of the front module 14 includes an inner wall portion 56, an upper wall portion 58 and a vertical wall 60. The inner wall portion 56 abuts against and is joined to the inner wall portion 48 of the side member 32. The upper wall portion 58 abuts against and is joined to the upper wall portion 52 of the side member 32. The vertical wall 60 abuts against a front end face 32D of the side member 32.

Fig. 3 is a sectional view cut along line A-A shown in Fig. 1. In the present exemplary embodiment as shown in Fig. 3, the joining portion 26 of the front module 14 further includes a joining wall 62 (a first joining portion) and a joining wall 64 (a second joining portion). The inner wall portion 48 of the side member 32 abuts against the joining wall 62 and is joined via a bolt 61 (a second fastening member). The upper wall portion 52 of the side member 32 abuts against the joining wall 64 and is joined via a bolt 63 (the second fastening member). That is, fastening holes 26A and 26B (first fastening holes) into which the bolts 61 and 63 can be screwed are respectively formed at the joining portion 26.

In the present exemplary embodiment, a fastening hole 52A (second fastening hole) at which the bolt 63 can be fastened is formed at the upper wall portion 52 of the side member 32. An opening portion 54A is formed at the lower wall portion 54 (a wall portion) that opposes the upper wall portion 52 at a position opposing the fastening hole 52A. The opening portion 54A is formed with a size through which the bolt 63 can be inserted. Thus, the bolt 63 can be inserted through the opening portion 54A into the chamber portion 55. The bolt 63 is then fastened to the fastening hole 52A formed at the upper wall portion 52 and the fastening hole 26B formed at the joining portion 26. Thus, the upper wall portion 52 of the side member 32 and the joining portion 26 of the front module 14 are fastened (joined) via the bolt 63. A screw thread may be formed in the fastening hole 26B in advance by tapping. The same applies to the fastening hole 26A, which is described below.

Further in the present exemplary embodiment, a fastening hole 48A (second fastening hole) at which the bolt 61 can be fastened is formed at the inner wall portion 48 of the side member 32. An opening portion 50A is formed at the outer wall portion 50 (a wall portion) that opposes the inner wall portion 48 at a position opposing the fastening hole 48A. Similarly to the opening portion 54A, the opening portion 50A is formed with a size through which the bolt 61 can be inserted. Thus, the bolt 61 can be inserted through the opening portion 50A into the chamber portion 55. The bolt 61 is then fastened to the fastening hole 48A formed at the inner wall portion 48 and the fastening hole 26A formed at the joining portion 26. Thus, the inner wall portion 48 of the side member 32 and the joining portion 26 of the front module 14 are fastened (joined) via the bolt 61.

The portion of each side member 32 at which the joining portion 26 of the front module 14 is disposed has been described here. The portion of the side members 32 at which the joining portions 44 of the rear module 18 are disposed is substantially the same as the portion at which the joining portions 26 of the front module 14 are disposed.

### = Operation and Effects of the Vehicle Structure =

Operation and effects of the vehicle structure according to the present exemplary embodiment are described.

As shown in Fig. 2, the vehicle 12 is provided with the center module 16 and the front module 14. The center module 16 supports the battery pack 28 disposed in the lower portion of the vehicle 12. The left and right pair of side members 32 and center cross members 34 and 36 of the center module 16 are formed integrally.

The pair of side members 32 respectively extend in the vehicle front-rear direction at the respective end portions in the vehicle width direction, and the center cross members 34 and 36 extend in the vehicle width direction between the pair of side members 32 at the central portions 32A of the pair of side members 32.

The cross member 24 and pair of joining portions 26 of the front module 14 are formed integrally. The cross member 24 extends in the vehicle width direction, and the pair of joining portions 26 respectively extend in the vehicle front-rear direction at the respective end portions in the vehicle width direction of the cross member 24. The pair of joining portions 26 are respectively joined to the front end portions 32B of the pair of side members 32.

The front end portions 32B of the side members 32 of the center module 16 are formed as free ends and are capable of resilient bending about the central portions 32A of the side members 32. Therefore, positions of the front end portions 32B of the side members 32 may be shifted in the vehicle width direction by the resilient bending.

Thus, in the present exemplary embodiment, when the pair of joining portions 26 of the front module 14 are being joined to the pair of side members 32 of the center module 16, mispositioning in the vehicle width direction between the joining portions 26 and the front end portions 32B of the side members 32 may be absorbed by the resilient bending of the side members 32.

In other words, the present exemplary embodiment may tolerate fabrication errors between members that are to be joined to one another, in this case the front module 14 and the side members 32 of the center module 16. Although not shown in the drawings, similarly to the front module 14, fabrication errors between the rear module 18 and the side members 32 of the center module 16 may also be tolerated.

Because the cross member 24 is provided between the pair of joining portions 26 of the front module 14, even though the front end portions 32B of the side members 32 of the center module 16 are free ends, rigidity of the center module 16 is assured by the cross member 24 being disposed between the front end portions 32B.

At least one of the front module 14 constituting the framework of the vehicle front portion or the rear module 18 constituting the framework of the vehicle rear portion is formed by casting. That is, at least one of the front module 14 or the rear module 18 is an "integrally molded" member.

For example, because the front module 14 is integrally molded in the present exemplary embodiment, a number of members may be reduced compared with a comparative example, not shown in the drawings, in which the front module 14 is integrated by plural members being joined to one another. Moreover, a number of work steps may be reduced in the present exemplary embodiment compared to the comparative example of joining plural members to one another.

To describe this more specifically, in the present exemplary embodiment the front module 14 further includes the left and right pair of wheel houses 20 in which wheels are to be disposed, and the left and right pair of wheel houses 20 are linked via the cross member 24. Thus, because the left and right pair of wheel houses 20 and the cross member 24 are molded integrally in the present exemplary embodiment, a number of components may be reduced compared to a structure, not shown in the drawings, in which the left and right pair of wheel houses 20 and the cross member 24 are formed as respectively separate bodies.

The joining portions 26 formed at the front module 14 each include the joining walls 62 and 64 to be joined to the corresponding side member 32 of the center module 16. The joining wall 62 is joined to the inner wall portion 48 of the side member 32 via the bolt 61, and the joining wall 64 is joined to the upper wall portion 52 of the side member 32 via the bolt 63.

At each joining portion 26 of the front module 14 to which the corresponding side member 32 of the center module 16 is joined, if a gap is formed between the joining portion 26 and the side member 32, a joining strength (fastening strength) due to axial forces of the bolts 61 and 63 is lowered. In the present exemplary embodiment, mispositioning in the vehicle width direction between the joining portion 26 and the side member 32 may be absorbed by resilient bending of the side member 32. As a result, the present exemplary embodiment may prevent or decrease a reduction in joining strength between the front module 14 and the side members 32 due to gaps forming.

In the present exemplary embodiment, as shown in Fig. 1 and Fig. 2, the through holes 34A and 36A are formed at the left and right, in the vehicle width direction, of the center cross members 34 and 36, respectively. The bolts 35 and 37 inserted into the through holes 34A and 36A are fastened to, respectively, the weld nuts 28B and 28C provided at the side of the through holes 34A and 36A at which the battery pack 28 is disposed. That is, the battery pack 28 is fixed (supported) at the center cross members 34 and 36 via the bolts 35 and 37 and the weld nuts 28B and 28C.

The battery pack 28 is supported by the left and right pair of side members 32 that constitute portions of the battery frame 30. In the present exemplary embodiment, the battery pack 28 is supported by both the left and right pair of side members 32 and the center cross members 34 and 36 that extend in the vehicle width direction at the central portions 32A in the vehicle front-rear direction of the left and right pair of side members 32. The present exemplary embodiment may inhibit a fall of the battery pack 28 at a time of collision of the vehicle 12.

The fastening hole 52A is formed at the upper wall portion 52 of each side member 32, and the bolt 63 is inserted through the opening portion 54A formed in the lower wall portion 54 and fastened to the upper wall portion 52 and the joining portion 26. The fastening hole 48A is formed at the inner wall portion 48 of each side member 32, and the bolt 61 is inserted through the opening portion 50A formed at the outer wall portion 50 and fastened to the fastening hole 48A.

Thus, because the side member 32 of the center module 16 and the joining portion 26 of the front module 14 are directly joined via the bolts 61 and 63, a number of components may be reduced compared to, for example, a structure in which the side member and joining portion are joined via a bracket, and a number of assembly steps is also reduced.

### = Supplementary Descriptions of the Present Exemplary Embodiment =

In the exemplary embodiment described above, the fastening hole 52A is formed at the upper wall portion 52 of each side member 32, and the bolt 63 is inserted through the opening portion 54A formed at the lower wall portion 54 and fastened to the fastening hole 52A and to the fastening hole 26B formed at the joining portion 26. The fastening hole 48A is formed at the inner wall portion 48 of the side member 32, and the bolt 61 is inserted through the opening portion 50A formed at the outer wall portion 50 and fastened to the fastening hole 48A and to the fastening hole 26A formed at the joining portion 26.

Thus, the above exemplary embodiment is described with the side members 32 of the center module 16 and the joining portions 26 of the front module 14 being joined via the bolts 61 and 63. However, provided the side members 32 and joining portions 26 can be joined, this is not limiting. That is, an adhesive may be employed in addition to the bolts 61 and 63, and alternative fastening members such as rivets or the like may be employed instead of the bolts 61 and 63. Beside fastenings, the side members 32 and joining portions 26 may be joined by adhesion by an adhesive or deposition by welding or the like.

In the present exemplary embodiment, the fastening hole 52A is formed at the upper wall portion 52 of each side member 32, and the bolt 63 is inserted through the opening portion 54A formed at the lower wall portion 54 and fastened to the fastening hole 52A. The fastening hole 48A is formed at the inner wall portion 48 of the side member 32, and the bolt 61 is inserted through the opening portion 50A formed at the outer wall portion 50 and fastened to the fastening hole 48A. However, this is not limiting. For example, one of the upper wall portion 52 and inner wall portion 48 of the side member 32 may be fastened by, for example, a fastening member and the other one may be adhered by adhesive.

In the present exemplary embodiment, the wheel houses 20, front pillars 22 and cross member 24 of the front module 14 are integrally molded by die-casting, and the wheel houses 38 and cross members 40, 42 and 46 of the rear module 18 are integrally molded by die-casting, but this is not limiting. For example, just one of the front module 14 and the rear module 18 may be integrally molded by die-casting.

An exemplary embodiment of the present disclosure has been described, but the present disclosure is not limited by this exemplary embodiment. The exemplary embodiment and various variant examples may be used in suitable combinations, and it will be clear that numerous modes may be embodied within a technical scope not departing from the scope of the present disclosure.

### = Additional Remarks =

The structures described below may be suitably combined to serve as the vehicle structure according to the present disclosure.

### - Structure 1 -

A vehicle structure is provided with: a first framework module that supports a battery pack disposed in a lower portion of a vehicle and that includes a pair of side members respectively extending, in a vehicle front-rear direction, at two end portions, in a vehicle width direction, and a first cross member extending, in the vehicle width direction, between the pair of side members at substantially central portions, in the vehicle front-rear direction, of the pair of side members, the pair of side members and the first cross member being integrally formed; and a second framework module that includes a second cross member extending in the vehicle width direction and a pair of extension portions respectively extending, in the vehicle front-rear direction, at both side portions, in the vehicle width direction, of the second cross member, the pair of extension portions being respectively joined to end portions, in the vehicle front-rear direction, of the pair of side members, the second cross member and the pair of extension portions being integrally formed.

### - Structure 2 -

The second framework module is formed by casting and serves as at least one of a front module that constitutes a framework of a vehicle front portion or a rear module that constitutes a framework of a vehicle rear portion.

### - Structure 3 -

The second framework module further includes a left and right pair of wheel houses in which wheels are to be disposed, and the left and right wheel houses are linked via the second cross member.

### - Structure 4 -

The pair of extension portions each include: a first joining portion that is joined to an inner wall portion forming an inner end, in the vehicle width direction, of a corresponding side member; and a second joining portion that is joined to an upper wall portion forming an upper end, in a vehicle vertical direction, of the corresponding side member.

### - Structure 5 -

A through hole is formed at the first cross member, the battery pack being fastened via a first fastening member that is inserted into the through hole.

### - Structure 6 -

A first fastening hole is formed at at least one of the first joining portion or the second joining portion, a second fastening member being insertable into the first fastening hole.

### - Structure 7 -

A cross section of each of the pair of the side members cut in a width direction orthogonal to a length direction of each of the pair of the side members is a chamber; and an opening portion, which is provided at a wall portion of each of the pair of the side members opposes the first fastening hole.

### - Structure 8 -

A second fastening hole is formed at at least one of the inner wall portion or the upper wall portion of each of the pair of side members, the second fastening member being insertable into the second fastening hole, and the opening portion is provided at at least one of an outer wall portion forming an outer end in the vehicle width direction of each of the pair of side members or a lower wall portion forming a lower end in the vehicle vertical direction of each of the pair of the side members.

## Claims

1. A vehicle structure (10) comprising a first framework module (16) and a second framework module (14, 18),
the first framework module (16) supporting a battery pack (28) disposed at a lower portion of a vehicle and the first framework module (16) comprising:
a pair of side members (32) respectively extending, in a vehicle front-rear direction, at both end portions, in a vehicle width direction, of the first framework module (16); and
a first cross member (34, 36) extending, in the vehicle width direction, between the pair of side members (32) at substantially central portions, in the vehicle front-rear direction, of the pair of side members (32);
the pair of side members (32) and the first cross member (34, 36) being integrally formed; and
the second framework module (14, 18) comprising:
a second cross member (24, 40, 42) extending in the vehicle width direction; and
a pair of extension portions (26, 44) respectively extending in the vehicle front-rear direction, at both side portions, in the vehicle width direction, of the second cross member (24, 40);
the pair of extension portions (26, 44) being joined to end portions, in the vehicle front-rear direction, of the pair of side members (32), and
the second cross member (24, 40, 42) and the pair of extension portions (26, 44) being integrally formed.

2. The vehicle structure (10) according to claim 1, wherein the second framework module (14, 18) is formed by casting and is configured to serve as at least one of a front module (14) that constitutes a framework of a vehicle front portion or a rear module (18) that constitutes a framework of a vehicle rear portion.

3. The vehicle structure (10) according to claim 1 or 2, wherein:
the second framework module (14, 18) further includes a left and right pair of wheel houses (20, 38) in which wheels are to be disposed, and
the left and right pair of wheel houses (20, 38) are linked via the second cross member (24, 40, 42).

4. The vehicle structure (10) according to any of claims 1 to 3, wherein the pair of extension portions (26, 44) each include:
a first joining portion (62) that is joined to an inner wall portion forming an inner end, in the vehicle width direction, of a corresponding side member (32) of the pair of side members (32); and
a second joining portion (64) that is joined to an upper wall portion forming an upper end, in a vehicle vertical direction, of the corresponding side member (32) of the pair of side members (32).

5. The vehicle structure (10) according to any of claims 1 to 4, wherein a through hole (34A, 36A) is formed at the first cross member (34, 36), the battery pack (28) being fastened via a first fastening member (35, 37) that is inserted into the through hole (34, 36).

6. The vehicle structure (10) according to claim 4, wherein a first fastening hole (48A, 52A) is formed at at least one of the first joining portion (62) or the second joining portion (64), a second fastening member (61, 63) being insertable into the first fastening hole (48A, 52A).

7. The vehicle structure (10) according to claim 6, wherein:
a cross section of each of the pair of side members (32) cut in a width direction orthogonal to a length direction of each of the pair of side members (32) is a chamber; and
an opening portion (50A, 54A), which is provided at a wall portion (50, 51) of each of the pair of side members (32), opposes the first fastening hole (48A, 52A).

8. The vehicle structure according to claim 7, wherein:
a second fastening hole (48A, 52A) is formed at at least one of the inner wall portion or the upper wall portion of each of the pair of side members (32), the second fastening member (61, 63) being insertable into the second fastening hole (48A, 52A); and
the opening portion (50A, 54A) is provided at at least one of an outer wall portion forming an outer end, in the vehicle width direction, of each the pair of side members (32) or a lower wall portion forming a lower end, in the vehicle vertical direction, of each of the pair of side members (32).
